# EUROPÄISCHE PATENTSCHRIFT

(11) **EP 0 490 351 B1**
(45) Veröffentlichungstag und Bekanntmachung des Hinweises auf die Patenterteilung: **10.08.1994**
(21) Anmeldenummer: 91121190.2
(22) Anmeldetag: 10.12.1991
(51) Int. Cl.: C10G 70/04

(54) **Verfahren zur Behandlung von Spaltgasen bei der Gewinnung von Ethylen**
Process for treatment of cracked gases whilst obtaining ethylene
Procédé pour le traitement de gaz de craquage dans l'obtention d'ethylène

(30) Priorität: 13.12.1990 DE 4039883
(43) Veröffentlichungstag der Anmeldung: 17.06.1992
(73) Patentinhaber: Linde Aktiengesellschaft, 65189 Wiesbaden (DE)
(72) Erfinder: Winkler, Hubertus, Dr. Dipl.-Ing., W-8100 Garmisch-Partenkirchen (DE); Müller, Klaus, Dipl.-Phys., W-8011 Vaterstetten (DE)
(74) Vertreter: Schaefer, Gerhard, Dr.

(56) Entgegenhaltungen:
- GB-A- 2 066 936
- US-A- 2 765 635
- ERNST BARTHOLOME 'Ulmanns Encyklopädie der Technische Chemie, band 8' 1974 , VERLAG CHEMIE , WEINHEIM
- PATENT ABSTRACTS OF JAPAN vol. 103, no. 90 (C-394)26. Dezember 1986

## Beschreibung

Die Erfindung betrifft ein Verfahren zur Behandlung von Spaltgasen in zumindest einer Verdichtungsstufe bei der Gewinnung von Ethylen, wobei die Spaltgase in der Verdichtungsstufe nach der Verdichtung einem Wärmetausch unterzogen und die Kondensate abgeschieden werden.

Bekanntermaßen wird bei Ethylenanlagen nach der Spaltung und Ölfraktionierung eine Spaltgasverdichtung vor der Weiterbehandlung der Spaltgase durchgeführt (vgl. Ullmanns Enzyklopädie der Technischen Chemie, 4., neubearbeitete und erweiterte Auflage, Band 8, Seiten 158 bis 194, speziell Seiten 182 bis 184 und 187). Die Spaltgasverdichtung findet dabei in einer oder mehreren Verdichterstufen statt, wobei die Zahl der Verdichterstufen üblicherweise zwischen einer und sechs liegt, je nach Rohstoff und Spaltschärfe. Die Kühlung in der einzelnen Verdichterstufe erfolgt entweder über eine Wasserquenchung oder über eine Stufenkühlung in Wärmetauschern. Vorzugsweise wird dabei Wasser als Kühlflüssigkeit verwendet.

Die Wasserquenchung bringt die Nachteile eines hohen apparativen Aufwands und hoher Betriebskosten mit sich. Die Stufenkühlung kann diese Nachteile teilweise reduzieren, sie weist jedoch andere Nachteile auf. Aus Gründen der Wirtschaftlichkeit muß der Druckverlust in der Verdichtungsstufe gering sein, weshalb Wärmetauscher mit einer relativ geradlinigen Durchströmung, d.h. niedrigen Reynoldszahlen, und größeren Abmessungen eingesetzt werden. Ein derartiger Wärmetauscher ist beispielsweise aus der DE-OS 39 13 579 bekannt. Der dort beschriebene Kreuzstrom-Wärmetauscher weist beim Einsatz in einer Verdichtungsstufe einer Ethylenanlage jedoch zum Teil einen relativ schlechten Wärmeübergang auf. Denn in dem von den Spaltgasen zuerst durchströmten Bereich des Wärmetauschers liegt die Temperatur der Spaltgase noch über dem Taupunkt der Gasbestandteile, so daß nur fühlbare Wärme abgeführt werden kann. Wird der Taupunkt dann in einem zweiten Bereich des Wärmetauschers unterschritten, erhöht sich der Wärmeübergang erheblich. Durch Polymerbildung an den heißen, trockenen Oberflächen im ersten Bereich der Wärmetauscher verkürzt sich deren Laufzeit. Durch Anlagerungen von Verschmutzungen (Fouling) auf den Kühlflächenaußenseiten erhöht sich der Druckverlust merklich.

Der Erfindung liegt daher die Aufgabe zugrunde, ein Verfahren der o.g. Art so zu verbessern, daß die aufgeführten Nachteile auf einfache Art vermieden werden.

Diese Aufgabe wird erfindungsgemäß dadurch gelöst, daß den Spaltgasen in der Verdichtungsstufe vor dem Wärmetausch Wasser zugemischt wird, dessen Temperatur niedriger ist als die der Spaltgase.

Überraschenderweise hat sich nämlich gezeigt, daß durch die erfindungsgemäße Beimischung, vorzugsweise Eindüsung, von kälterem Wasser in die Spaltgase die oben aufgezählten Nachteile beseitigt werden können. Die erfindungsgemäße Beimischung des Wassers in die Spaltgase erfolgt so, daß die Temperatur des Wasser-Spaltgas-Gemisches bereits beim Eintritt in den ersten Bereich der Wärmetauscher in der Nähe des Taupunkts der Gaskomponenten liegt. Der Wärmeübergang in den Wärmetauschern wird so wesentlich verbessert. Denn es stellt sich ein erhöhter Wärmeübergang über die ganze Länge der Wärmetauscher ein, obwohl die Temperaturdifferenz in den Wärmetauschern verringert wird, da ja die Eintrittstemperatur der Spaltgase in die Wärmetauscher durch die Zumischung von kälterem Wasser erniedrigt wurde. Im erfindungsgemäßen Verfahren wird eine Wasseraufsättigung der Spaltgase angestrebt. Der bessere Wärmeübergang ist eine Folge der im erfindungsgemäßen Verfahren bereits am Eintritt der Wärmetauscher einsetzenden Kondensation. Die heißen, trockenen Oberflächen in den Wärmetauschern treten nicht mehr auf. Es verringert sich somit auch die Gefahr der Polymerisation. Die Anlagerung von Verschmutzungen nimmt ebenfalls deutlich ab. Außerdem werden die Laufzeiten der Wärmetauscher erheblich erhöht.

Mit besonderem Vorteil wird als Wasser in der bzw. den Verdichtungsstufen auskondensiertes und von den übrigen Kondensaten abgetrenntes Prozeßwasser verwendet.

Die Erfindung ist nicht nur auf die für das erfindungsgemäße Verfahren besonders geeigneten Kreuzstrom-Wärmetauscher beschränkt, da die erfindungsgemäßen Vorteile auch bei anderen Wärmetauschern erzielt werden können. Die Spaltgase können in einem oder mehreren Wärmetauschern in einer Verdichtungsstufe abgekühlt werden.

Erfindungsgemäß kann bei einer mehrstufigen Spaltgasverdichtung die Wasserbeimischung in die Spaltgase in nur einer Verdichtungsstufe, in mehreren oder allen Verdichtungsstufen eingesetzt werden. Besondere Vorteile ergeben sich dabei, wenn die erfindungsgemäße Wassereinspeisung in der in Strömungsrichtung ersten Verdichtungsstufe bzw. den ersten Verdichtungsstufen der mehrstufigen Spaltgasverdichtung eingesetzt wird, da gerade in der bzw. den ersten Verdichtungsstufen die Gefahr der Polymerbildung bzw. der Anlagerung von Verschmutzungen besonders ausgeprägt ist. Eine eventuell notwendige Entfernung von Sauergasen aus den Spaltgasen kann beim erfindungsgemäßen Verfahren zwischen einzelnen Verdichtungsstufen oder nach der letzten Verdichtungsstufe erfolgen.

Das erfindungsgemäße Verfahren bringt die Vorteile mit sich, daß zum einen beim Bau einer Ethylenanlage die Wärmetauscher in der Verdichtungsstufe wesentlich kleiner dimensioniert werden können und zum anderen bei bereits bestehenden Anlagen die Wärmetauscher für eine Erhöhung des Durchsatzes bis zu ca. 40% ohne bauliche Veränderungen geeignet sind.

Die Erfindung soll im folgenden anhand eines schematisch dargestellten Ausführungsbeispiels noch näher erläutert werden.

Dazu zeigt
- Figur 1: eine erfindungsgemäße Verdichtungsstufe.
- Figur 2: stellt qualitativ den Verlauf des Wärmeübergangskoeffizienten α im Wärmetauscher in Durchströmungsrichtung ohne bzw. mit erfindungsgemäßer Wassereindüsung dar.

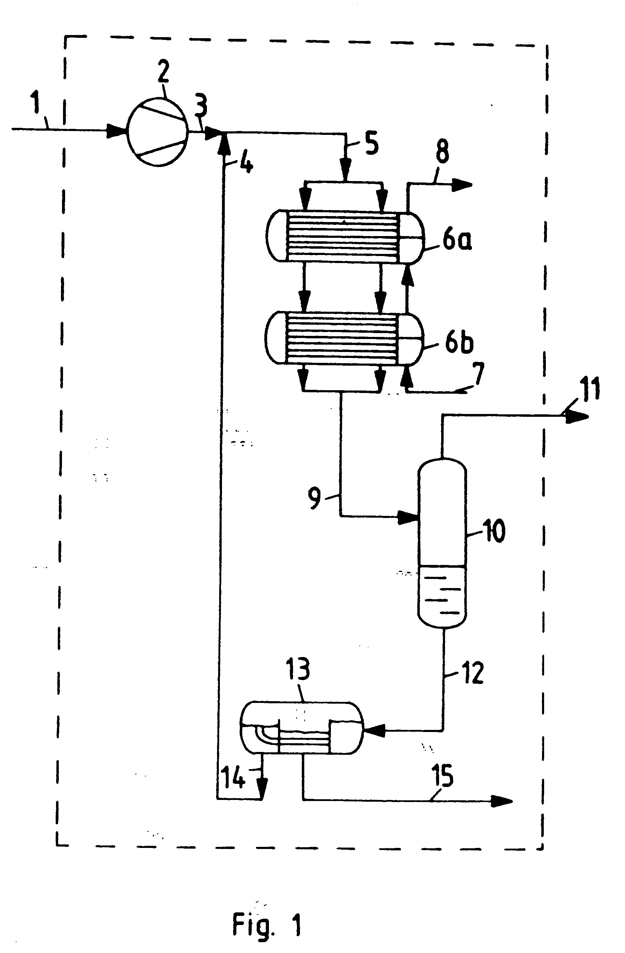

Der in Figur 1 gestrichelt dargestellte Bereich markiert eine einzelne erfindungsgemäße Verdichtungsstufe. Beispielsweise gelangen aus einer vorangehenden Ölfraktionierung über Leitung 1 200 t/h Spaltgase in den Verdichter 2. Das Spaltgas hat nach der Verdichtung eine Temperatur von etwa 90°C. Durch die Wasserinjektion von etwa 10 bis 20 t/h über Leitung 4 wird eine Abkühlung des Spaltgasgemisches auf ca. 70°C in Leitung 5 bewirkt. Der Gasstrom 5 wird aufgeteilt und durch die Kreuzstrom-Wärmetauscher 6a und 6b geleitet. Über Leitung 7 gelangt Kühlwasser mit etwa 30°C im Gegenstrom durch die Wärmetauscher 6b und 6a und verläßt mit einer Temperatur von etwa 40°C über Leitung 8 den Kreuzstrom-Wärmetauscher 6a. Das auf etwa 38°C abgekühlte Gasgemisch wird über Leitung 9 einem Abscheider 10 zugeführt. Von dessen Kopf werden über Leitung 11 die Gasbestandteile abgezogen und einer weiteren Verdichtungsstufe oder einer Weiterbehandlung zugeleitet. Vom Boden des Abscheiders 10 werden über Leitung 12 die Kondensate zum Trennbehälter 13 geführt. Das im Trennbehälter 13 gewonnene Prozeßwasser wird in einer Menge zwischen ca. 10 und 20 t/h und einer Temperatur von etwa 38°C über Leitung 14 dem Trennbehälter 13 entnommen und zur Wasserinjektion in Leitung 4 geleitet. Über Leitung 15 werden ferner vom Trennbehälter 13 Benzin und/oder höhere Kohlenwasserstoffe abgezogen.

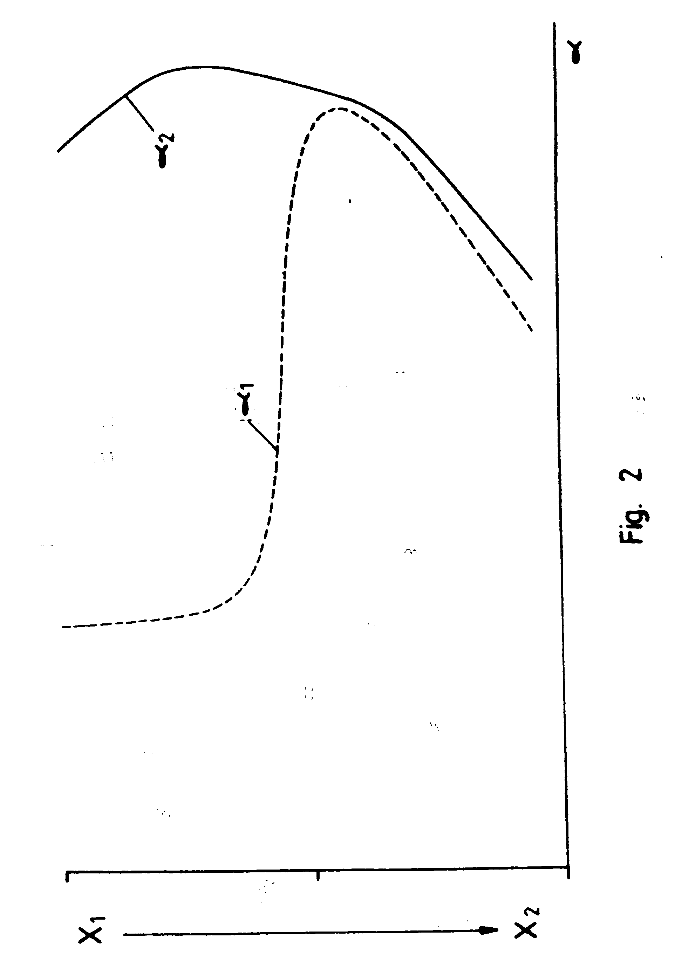

Im Diagramm aus Figur 2 ist auf der Abszisse der Wärmeübergangskoeffizient α und auf der Ordinate der Ort X in Strömungsrichtung im Wärmetauscher aufgetragen. Der Spaltgaseintritt in den Wärmetauscher erfolgt dabei an der Stelle X₁, der Gasaustritt an der Stelle X₂. Der neben der Ordinatenachse gezeichnete Pfeil zeigt die Strömungsrichtung der Spaltgase durch den Wärmetauscher an. Die gestrichelte Kurve α₁ zeigt den Verlauf des Wärmeübergangskoeffizienten ohne Wasserinjektion in die Spaltgase vor dem Wärmetauscher. Kurve α₂ gibt den Verlauf des Wärmeübergangskoeffizienten für die erfindungsgemäße Eindüsung von Wasser vor dem Wärmetausch wieder. Das Diagramm verdeutlicht den wesentlich besseren Wärmeübergang beim erfindungsgemäßen Verfahren.

## Patentansprüche

1. Verfahren zur Behandlung von Spaltgasen in zumindest einer Verdichtungsstufe bei der Gewinnung von Ethylen, wobei die Spaltgase in der Verdichtungsstufe nach der Verdichtung einem Wärmetausch unterzogen und die Kondensate abgeschieden werden, **dadurch gekennzeichnet**, daß den Spaltgasen in der Verdichtungsstufe vor dem Wärmetausch Wasser zugemischt wird, dessen Temperatur niedriger ist als die der Spaltgase.

2. Verfahren nach Anspruch 1, **dadurch gekennzeichnet,** daß als Wasser in der Verdichtungsstufe auskondensiertes und von den übrigen Kondensaten abgetrenntes Prozeßwasser eingesetzt wird.

3. Verfahren nach Anspruch 1 oder 2, **dadurch gekennzeichnet**, daß bei einer Spaltgasverdichtung in mehreren Verdichtungsstufen in zumindestens der oder den ersten Verdichtungsstufen Wasser vor dem Wärmetausch zugemischt wird.

## Claims

1. Process for treatment of cracked gases in at least one compression stage during the preparation of ethylene, in which the cracked gases are subjected to a heat exchange in the compression stage after compression and the condensates are separated, characterised in that water at a temperature lower than that of the cracked gases is mixed with the cracked gases in the compression stage before the heat exchange.

2. Process according to claim 1, characterised in that process water condensed in the compression stage and separated from the remaining condensates is used as the water.

3. Process according to claim 1 or 2, characterised in that when cracked gases are compressed in a plurality of compression stages, water is added before the heat exchange in at least the first compression stage or stages.

## Revendications

1. Procédé de traitement d'un gaz de craquage dans au moins une étape de compression dans le but de récupérer de l'éthylène, dans lequel le gaz de craquge dans ladite étape de compression, postérieurement à la compression, est soumis à un échange thermique puis les condensats obtenus sont séparés, caractérisé en ce que l'on ajoute au gaz de craquage, dans l'étape de compression et en amont de l'échange de chaleur, de l'eau dont la température est inférieure à celle du gaz de craquage.

2. Procédé selon la revendication 1, caractérisé en ce que dans l'étape de compression est utilisée l'eau qui se condense et qui est séparée du reste du condensat.

3. Procédé selon la revendication 1 ou 2, caractérisé en ce que, lors de la compression de gaz de craquage en plusieurs étapes, de l'eau est ajoutée en amont de l'échange au moins dans les étapes ou la première étape de compression.
